# EUROPÄISCHE PATENTANMELDUNG

(11) **EP 2 236 896 A2**
(43) Veröffentlichungstag der Anmeldung: **06.10.2010**
(21) Anmeldenummer: 09700095.4
(22) Anmeldetag: 04.02.2009
(51) Int. Cl.: F16L 58/02, F16L 58/10, F16L 9/147, B29C 43/00, B05D 7/22

(54) **ROHRLEITUNG MIT INNENBESCHICHTUNG ZUM SCHUTZ GEGEN ABLAGERUNGEN UND VERFAHREN ZUR ANBRINGUNG EINER SOLCHEN BESCHICHTUNG**

(30) Priorität: 27.12.2007 RU 2007149567
(71) Anmelder: Gaysin, Malik Favzavievich, Sverdlovskaya obl. 620142 (RU); Zamaleev, Firdaus Usmanovich, Sverdlovskaya obl. 620057 (RU); Pilugin, Alexandr Nikolaevich, Sverdlovskaya obl. 620050 (RU)
(72) Erfinder: Gaysin, Malik Favzavievich, Sverdlovskaya obl. 620142 (RU); Zamaleev, Firdaus Usmanovich, Sverdlovskaya obl. 620057 (RU); Pilugin, Alexandr Nikolaevich, Sverdlovskaya obl. 620050 (RU)
(74) Vertreter: Jeck, Anton
(86) Internationale Anmeldenummer: PCT/RU2009/000047
(87) Internationale Veröffentlichungsnummer: WO 2009/084987

(57) **Zusammenfassung**

Die Erfindung betrifft ein Steigrohr mit einer ablagerungsvorbeugender Innenbeschichtung einschließlich des eigentlichen Steigrohrs und einer Polyurethanbeschichtung der Steigrohrinnenwand. Die Ausführung des Steigrohrs ist so gewählt, dass die Beschichtung ihr endgültiges Aussehen und ihre Endkenndaten nach der Erhärtung von Polyurethan erreicht, während ein Stempel in das Steigrohr eingesetzt ist und einen solchen Außendurchmesser aufweist, und dass der Abstand zwischen dem Stempel und der Steigrohrwand der Beschichtungsstärke gleich ist. Beim Verfahren ist vorgesehen, dass das Beschichtungsmaterial in den Ringraum eingepresst wird, der durch die Innenwand des Steigrohrs gebildet wird und dass der Ringraum mit Beschichtungsmaterial gefüllt wird. Das so aufgebaute Steigrohr und das Verfahren zu dessen Herstellung führen zu einer langen Lebensdauer der Beschichtung und sind bei beliebigen Verfahren der Gewinnung von rohen Kohlenwasserstoffen anwendbar

## Beschreibung

Die Erfindung betrifft ein Steigrohr mit einem Ablagerungsvorbeuger und Innenbeschichtung einschließlich des eigentlichen Steigrohrs und einer Polyurethanbeschichtung der Steigrohrinnenwand mit einer Glanzoberfläche und Verfahren zu ihrem Auftragen.

Die Erfindung ist im Erdölbergbau und insbesondere bei der Vorbeugung von Ablagerungen (Asphaltteerparaffin-, salinären, Hydratablagerungen usw.) auf der Innenoberfläche der Steigrohre (Tubing) einsetzbar. Die Erfindung kann auch zur Beschichtung der Innenoberfläche von Steigrohren eingesetzt werden. Sie kann bei beliebigen Verfahren der Gewinnung von rohen Kohlenwasserstoffen (Erdöl und Gas) unabhängig von den Sondenbetriebsbedingungen und von der Qualität der geförderten Rohstoffe verwendet werden.

Aus dem Patent RU Nr. 2144803 ist ein Verfahren zum Auftragen einer Beschichtung auf die Innenoberfläche einer Rohrleitung bekannt. Dieses Verfahren umfasst eine ein- bzw. mehrschichtige Umhüllung der Rohrleitung, z. B. die Umhüllung mit einer Folienbahn. Diese Umhüllung wird an die Oberfläche der Rohrleitung durch Erzeugung von Druckdifferenzen angepresst.

Die Mängel dieses Verfahrens sind Schwierigkeiten bei der Herstellung einer gleichmäßigen Auskleidung der Rohrinnenoberfläche mit der Folienbahn, eine niedrige Zuverlässigkeit bei der Befestigung der Auskleidung an der Oberfläche der Rohrleitung und eine geringe Beständigkeit gegen sehr aggressive Medien.

Aus dem Patent RU Nr. 2118742 ist ein Verfahren zum Schutz der Innenoberfläche von Rohrleitungen bekannt. Das Verfahren sieht das Auftragen einer Kunststoffschutzbeschichtung auf die Innenoberfläche der Rohrleitung vor, indem der Kunststoff zuerst zähflüssig gemacht wird und danach erhärtet.

Der Mangel dieser Erfindung besteht darin, dass infolge einer zu schnellen Abkühlung des geschmolzenen Kunststoffes im thermomechanischen Modul keine homogenisierte Beschichtungsschicht hergestellt werden kann. Es ist auch nicht möglich, die feste Bindung zwischen dem Kunststoff und der Rohroberfläche wegen der zu intensiven schrumpffähigen Vorgänge im Kunststoff zu erreichen. Darüber hinaus verursacht die Bewegung des thermomechanischen Moduls entlang des Rohrs eine Längenänderung des Verbindungsstücks zwischen der Strangpresse und dem Modul, sowie Fließbedingungen der Schmelze durch dieses Verbindungsstück. Das verändert den physikalischen Zustand des Kunststoffes und verschlechtert somit die Qualität der Beschichtung sowie die Haftfestigkeit zwischen Polymere und Metall.

Aus dem Patent RU Nr. 2184903 ist ein Verfahren zur Thermoplastbeschichtung der Oberflächen einer Rohrleitung mittels Spritzgießen bekannt. Gemäß diesem Verfahren wird das Metallrohr in das Werkzeug gelegt. Der zähflüssige thermoplastische Kunststoff wird in das Werkzeug gegeben, während das Werkzeug erwärmt wird. Danach erfolgt die Erhärtung des thermoplastischen Kunststoffes und das Rohr kann dem Werkzeug entnommen werden.

Die Mängel dieser Erfindung sind ein komplizierter verfahrenstechnischer Fertigungsablauf und beachtliche Kosten für die Herstellung des Werkzeuges, besonders wenn es sich um Langrohre handelt. Darüber hinaus ist das genannte Verfahren nicht für die Rohre mit Durchmesser von unter 200 mm geeignet.

In der Erdöl- und Erdgasgewinnungsbranche gibt es weltweit ein immer noch nicht gelöstes Hauptproblem:

Das sind die Ablagerungen an den Wänden der Steigrohre (Tubing), welche in Sonden zur Gewinnung von rohen Kohlenwasserstoffen (Erdöl und Gas) verwendet werden. Dabei fängt dieser Vorgang sofort mit der ersten Stunde der Öl- bzw. Gasgewinnung unter beliebigen Klimabedingungen an und dauert bis zur endgültigen Verstopfung des Steigrohrs. Die Ablagerungen verursachen einen schnelleren Verschleiß der Pumpenausrüstung, Extrakosten und Zeitverlust im Zusammenhang mit der Steigrohrreinigung. Darüber hinaus wird der Steigrohrdruck wegen der auftretenden Durchlassquerschnittabnahme abgebaut. Das erhöht den Ausfallanteil von rohen Kohlenwasserstoffen.

Je nach der Qualität der rohen Kohlenwasserstoffe variiert die Zeit zwischen den erforderlichen Steigrohrreinigungen bei unterschiedlichen Vorkommen von einem Tag bis zu einem Jahr.

So wird z.B. die Entfernung von Paraffinablagerungen im Buzuluk-Vorkommen alle 1 bis 15 Tage je nach Sonde vorgenommen. Bei Vorkommen in Tyumen beträgt diese Zeit 5 bis 20 Tage, bei Vorkommen in der Umgebung von Surgut 7 bis 30 Tage usw.

Dieses Problem ist daher zeitnahe. Nach eingehenden Studium und einer Untersuchung der Gründe für die Bildung der genannten Ablagerungen auf der Innenoberfläche der Steigrohre sind der Aufbau und ein Verfahren zur Beschichtung der Steigrohrinnenoberfläche vorgeschlagen. Der Aufbau der Beschichtung und das entsprechende Verfahren ermöglichen es, das Problem umfassend auf der Systemebene zu lösen.

Es gibt drei Hauptfaktoren, welche zur Verkrustung der Innenoberfläche von Steigrohren beitragen:
1. Die Rauhigkeit der Innenoberfläche der Steigrohre (Tubing),
2. Das Vorhandensein einer Ruhespannung auf der Innenoberfläche der Steigrohre während der Ölförderung und
3. das Temperaturgefälle an den Steigrohrwänden.

Aufgrund dieser drei genannten Faktoren sind die Anforderungen an die Ausführung der Beschichtung sowie an das Verfahren selbst festgelegt, um die Bildung von Ablagerungen auszuschließen:
1. Die Beschichtungsstärke 2 bis 8 mm, um die Wärmeleitfähigkeit zu vermindern und akute Temperaturdifferenzen an den Steigrohrwänden auszuschließen.
2. Hochreine Beschichtungsoberfläche, Glanzoberfläche.
3. Die Speicherung der Ruhespannung muss ausgeschlossen sein.

Die Erfüllung der genannten Anforderungen schließt die Bildung von Ablagerungen aus. Zusätzlich zu diesen Voraussetzungen muss die Beschichtung selbst und Verfahren zu ihrem Auftragen Folgendes aufweisen:
1. Eine Beständigkeit gegen aggressive Medien (Säuren, Alkalien usw.).
2. Kontinuität, gute Metallhaftung und Wasserdichtigkeit zur Vorbeugung einer Korrosion an der Innenoberfläche der Steigrohre.
3. Elastizität, Beständigkeit gegen Rissbildung bei Schlagbeanspruchungen und gegen eine Durchbiegung des Steigrohrs bei Temperatur von bis -60 °C.
4. Eine Beständigkeit gegen Abrieb bei einer Beanspruchung durch einen Strom von Schwebeteilchen mit einer Mohs-Härte 7.
5. Die Aufrechterhaltung der normalen Eigenschaften der Beschichtung im Temperaturbereich von -60 °C bis +110 °C.

Es ist daher Aufgabe der Erfindung die Entwicklung eines Aufbaus und von einem Verfahren zur Beschichtung der Innenoberfläche der Steigrohre, welche Ablagerungen vorbeugen und eine lange Lebensdauer aufweisen. Dieser Aufbau und das Verfahren müssen bei beliebigen Verfahren zur Gewinnung von rohen Kohlenwasserstoffen anwendbar sein, unabhängig von Sondenbetriebsbedingungen und von Qualität der fossilen Förderrohstoffe sowie von der Übereinstimmung mit den oben angegebenen Anforderungen.

Die gestellte Aufgabe wird mit den Merkmalen der Ansprüche 1 und 5 gelöst.

Durch Untersuchungsarbeit, Recherchen und zahlreiche Versuche ist das Material gewählt, welches alle genannten Anforderungen erfüllt. Das ist ein Polyurethansystem (nachfolgend Polyurethan). Seine Kenndaten sind in Tabelle 1 angegeben.

**Tabelle 1 - Kenndaten des Polyurethansystems**

| Technische Kenndaten | Werte |
|---|---|
| Shore-Härte nach DIN 53516 | 80 - 95 A |
| Zugfestigkeit DIN 53504 | 13-45 N/mm² |
| Reißlänge nach DIN 53504 | 500-600 % |
| Einreißfestigkeit nach DIN 53515 | 10-50 N/mm |
| Abrieb DIN 53516 | 8-25 mg |
| Bleibende Druckverformung bei 23°C/72 Stunden DIN 53517 | 11-19 % |
| Bleibende Druckverformung bei 70°C/24 Stunden DIN 53517 | 30-45 % |
| Rückprallelastizität DIN 53512 | 70-75 % |
| Betriebstemperaturverhältnisse | -60...110°C |
| Mechanisches Gedächtnis bei Schlagbeanspruchungen | 100 % |

Das technische Ergebnis besteht in einer Hochhaftung von Polyurethan an der Innenoberfläche des Steigrohrs und eine Beschichtungsglanzoberfläche, in der Herstellung einer homogenisierten Beschichtung mit einer vorgegebenen Stärke sowie in der Erfüllung der oben genannten Anforderungen.

Das genannte technische Ergebnis wird folgenderweise erreicht. Ein Stempel mit hochreiner Oberfläche wird ins Steigrohr mittels Dorne eingesetzt. Die Innenoberfläche des Steigrohrs und der Stempel bilden einen Ringraum aus. Das Polyurethan wird in den Ringraum eingepresst. Das Polyurethan wird bis zur vollständigen Erhärtung gehalten. Danach wird der Stempel aus dem Steigrohr entfernt. Somit wird die völlige Haftung von Polyurethan an die Metallwand des Steigrohrs, die Glanzoberfläche der Beschichtung und die gleichmäßige Stärke der Beschichtung erreicht. Je nach dem Schrumpfverhältnis von Polyurethan kann in das Steigrohr ein Gitterrohr eingesetzt werden. Das Gitterrohr kann aus gelochtem Metall ausgeführt sein. Der Außendurchmesser des Gitterrohrs stimmt mit dem Innendurchmesser des Steigrohrs überein. Wenn erforderlich und aufgrund der Technologie für die Verarbeitung von manchen Polyurethanarten wird das Steigrohr vor dem Einpressen von Polyurethan bis zur erforderlichen Temperatur nach einem beliebigen bekannten Verfahren erwärmt.

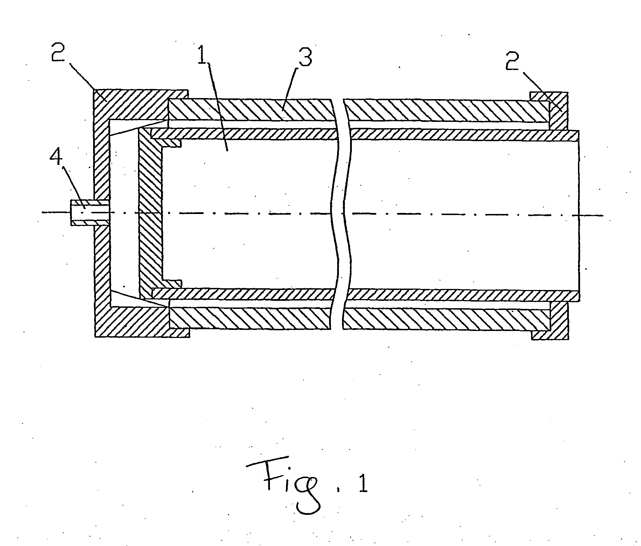

Der Zusammenbau der Konstruktion und das Verfahren zum Auftragen der Beschichtung umfasst folgende Fertigungsschritte:
1. Die Innenoberfläche des Steigrohrs wird entzundert, entstaubt, entfeuchtet und danach entfettet.
2. In das gereinigte und entfettete Steigrohr wird der Stempel mit Außenoberflächenrauhigkeit von mindestens der 9. Reinheitsklasse eingesetzt. Der Durchmesser des Stempels wird so gewählt, dass zwischen dem Stempel und der Innenwand des Steigrohres ein Abstand ausgebildet wird, der der Beschichtungsstärke gleich ist. (Die Beschichtungsstärke beträgt 2 bis 8 mm).
3. Die Außenfläche des Stempels wird vorher - noch vor dem Schritt gemäß Punkt 2 - mit einem Trenngleitstoff behandelt, um die Entnahme des Stempels noch mehr zu erleichtern.
4. Darüber hinaus wird vor dem Schritt 2 und beim Schrumpfverhältnis mancher Polyurethanarten von über 2 % ein Gitterrohr in den Innenraum des Steigrohrs eingesetzt. Das Gitterrohr wird aus gelochtem Metall gefertigt. Der Außendurchmesser des Gitterrohrs ist dem Innendurchmesser des Steigrohrs gleich und die Stärke beträgt max. 1,5 mm. Das Gitterrohr verhindert die Polyurethanschrumpfung. Somit wird eine gleichmäßigere Schicht der Beschichtung mit hoher Adhäsion an der Steigrohrwand erreicht.
5. Der Stempel (1) wird durch Dorne (2) zentriert. Die Dorne (2) werden auf die Stirnflächen des Steigrohrs (3) aufgesetzt. Einer der Dornen (2) weist einen Anschluss (4) zum Einpressen von Polyurethan auf (Fig. 1).
6. Wenn erforderlich und aufgrund der Technologie für die Verarbeitung von manchen Polyurethanarten wird die zusammengebaute Konstruktion bis zur erforderlichen Temperatur, die meistens 80 °C nicht überschreitet, erwärmt. Die Erwärmung erfolgt unter dem Einsatz von ringförmigen Rohrheizkörpern, im Ofen oder nach einem anderen bekannten Verfahren.
7. Um einer Hohlraumbildung in der Beschichtung vorzubeugen, wird die zusammengebaute Konstruktion senkrecht aufgestellt, so dass der Anschluss nach unten gerichtet ist. Danach wird die Polyurethanmasse in den Anschluss eingefördert, bis der Raum gefüllt ist.
8. Nach der endgültigen Polyurethanerhärtung wird der Stempel aus dem Steigrohr in einer waagerechten Position entfernt.
9. Die Stirnflächen des Steigrohrs werden mechanisch behandelt, um einen überflüssigen Grat zu entfernen.

Der Einsatz dieses Aufbaus und des Verfahrens zum Auftragen der Beschichtung in Kombination mit dem genannten Material wird es ermöglichen, eine homogenisierte Beschichtung mit gleichmäßiger Stärke, Glanzoberfläche, hoher Beständigkeit gegen aggressive Medien, hoher Haftung an der Innenoberfläche der Steigrohre, hoher Abriebfestigkeit und hoher Temperaturbeständigkeit herzustellen. Diese Beschichtung schließt die Bildung von Ablagerungen und die damit zusammenhängenden Folgen aus. Diese Beschichtung verlängert auch die Zeit zwischen den Betriebsausbesserungen und den Generalüberholungen der Sonden und vergrößert so im Endeffekt die Lebensdauer des Steigrohrs.

## Patentansprüche

1. Steigrohr mit einer ablagerungsvorbeugenden Innenbeschichtung einschließlich des eigentlichen Steigrohrs (3) und einer Polyurethanbeschichtung der Steigrohrinnenwand mit einer Glanzoberfläche,
**dadurch gekennzeichnet,**
**dass** die Beschichtung ihr endgültiges Aussehen und ihre Endkenndaten nach der Erhärtung von Polyurethan erreicht, während ein Stempel (1) in das Steigrohr (3) eingesetzt ist und einen solchen Außendurchmesser aufweist und dass der Abstand zwischen dem Stempel (1) und der Steigrohrwand der Beschichtungsstärke gleich ist.

2. Steigrohr mit ablagerungsvorbeugender Innenbeschichtung nach Anspruch 1,
**dadurch gekennzeichnet,**
**dass** bei einem Schrumpfverhältnis mancher Polyurethanarten von über 2 % ein Gitterrohr in den Innenraum des Steigrohrs (3) eingesetzt ist,
**dass** das Gitterrohr aus gelochtem Metall gefertigt ist und
**dass** der Außendurchmesser des Gitterrohrs dem Innendurchmesser des Steigrohrs (3) gleich ist und eine Stärke von max. 1,5 mm beträgt.

3. Steigrohr mit ablagerungsvorbeugender Innenbeschichtung nach Anspruch 1,
**dadurch gekennzeichnet,**
**dass** der Stempel (1) eine Außenoberflächenrauhigkeit von mindestens der 9. Reinheitsklasse hat und
**dass** der Stempel (1) mit einem Trenngleitstoff behandelt ist, um eine Glanzoberfläche der Beschichtung zu erreichen.

4. Steigrohr mit ablagerungsvorbeugender Innenbeschichtung nach Anspruch 1,
**dadurch gekennzeichnet,**
**dass** der Stempel (1) durch auf die Stirnflächen des Steigrohrs (3) aufgesetzte Dornen (2) zentriert ist, um eine gleichmäßige Beschichtungsstärke zu erreichen.

5. Verfahren zum Auftragen einer Beschichtung auf die Steigrohrinnenoberfläche, welche Ablagerungen ausschließt und welche die Reinigung und das Entfetten der Innenoberfläche des Steigrohr (3), das Einpressen des Beschichtungsmaterials und seine nachfolgende Erhärtung einschließt,
**dadurch gekennzeichnet,**
**dass** das Beschichtungsmaterial in den Ringraum einpresst wird, der durch die Innenwand des Steigrohrs (3) und dem Stempel (1) gebildet wird und
**dass** der Ringraum mit Beschichtungsmaterial gefüllt wird.

6. Verfahren nach Anspruch 5,
**dadurch gekennzeichnet,**
**dass** das Einpressen in senkrechter Stellung über den Anschluss (4) im Dorn (2) vorgenommen wird, um eine Hohlraumbildung in der Beschichtung zu vermeiden, wobei der Dorn (2) auf die untere Stirnfläche des Steigrohr (3) aufgesetzt wird.

7. Verfahren nach Anspruch 5,
**dadurch gekennzeichnet,**
**dass** der Außendurchmesser des Stempels (1) so gewählt wird, dass der Abstand zwischen dem Stempel (1) und dem Innendurchmesser des Steigrohrs (3) der Beschichtungsstärke entspricht.

8. Verfahren nach Anspruch 5,
**dadurch gekennzeichnet,**
**dass** das Steigrohr (3), wenn erforderlich und aufgrund der Technologie für die Verarbeitung von manchen Polyurethanarten, vor dem Einpressen von Polyurethan bis zur erforderlichen Temperatur unter Einsatz von ringförmigem Rohrheizkörper, im Ofen oder nach einem anderen bekannten Verfahren erwärmt wird.

9. Verfahren nach Anspruch 5,
**dadurch gekennzeichnet,**
**dass** der Stempel (1) in der waagerechten Lage nach der endgültigen Erhärtung des Polyurethans entfernt wird.
